# EUROPEAN PATENT SPECIFICATION

(11) **EP 3 689 128 B1**
(45) Date of publication and mention of the grant of the patent: **16.03.2022**
(21) Application number: 19717746.2
(22) Date of filing: 14.01.2019
(51) Int. Cl.: A01D 67/00, A01D 34/66

(54) **FOLDING CHASSIS OF LAWN MOWER**
KLAPPRAHMEN EINES RASENMÄHERS
CHÂSSIS PLIANT DE TONDEUSE À GAZON

(30) Priority: 06.12.2018 CN 201811486847
(43) Date of publication of application: 05.08.2020
(73) Proprietor: Ningbo Langhui Tools Co., Ltd., Ningbo Zhejiang 315506 (CN)
(72) Inventor: Zhao, YanHui, Zhejiang 315506 (CN)
(74) Representative: Sun, Yiming
(86) International application number: PCT/CN2019/071545
(87) International publication number: WO 2020/113777

(56) References cited:
- WO-A1-2010/140929
- CN-A- 102 448 283
- CN-A- 102 802 401
- CN-A- 108 029 325
- CN-A- 108 312 141
- CN-A- 108 312 141
- CN-U- 207 465 216
- CN-U- 207 465 216
- DE-A1- 4 407 812
- FR-A1- 2 871 077
- JP-A- 2005 198 524
- JP-A- 2016 187 316
- JP-B2- 4 324 964
- NL-A- 7 905 005

## Description

### TECHNICAL FIELD OF THE INVENTION

The present invention relates to the technical field of mowers, and more particularly, to a folding-type chassis of a lawn mower.

### BACKGROUND OF THE INVENTION

With the continuous development of living standards, people have higher demands on environmental landscaping. Lawns, playing an important role in the greening of urban areas, are maintained at a short height with mowers for aesthetic and recreational purposes. In the prior art, traditional mowers sold on the market are mainly divided into a riding-type, a pushed-type and a handheld-type. The riding-type mower is normally four-wheeled, allowing an operator to ride on. It's high-powered, highly-efficient and suitable for mowing large lawn areas such as a football field, a golf course or a city park. The pushed-type mower has lower power consumption and smaller size, thus being used for mowing smaller lawn areas such as greenbelts along roads. The handheld-type mower is smaller and portable, designed specifically for lawn areas that are very small or incapable of being touched by a large mower.

WO 2010/140929 A1 discloses a lawn mower, which has cutting width adjustment mechanism, cutter housings articulating mechanism and which provides convenient servicing and storage positions. The lawn mower comprises a seat defining an operator position, a front mounted cutting deck, and at least a first cutter bar enclosed in a first cutter housing rotatable about a first vertical axle and a second cutter bar enclosed in a second cutter housing rotatable about a second vertical axle, a hinge mechanism for connecting footplates to the lawn mower, a pivot support arm for connecting a steering wheel to the lawn mower, a movable arm for lifting the lawn mower to an upright position, the first and second axles being spaced from each other by a transversal distance, wherein the transversal distance between the axles can be adjusted to increase or decrease. Moreover, the cutter housings can change an angle and a height with respect to a transverse centre axis of a centre cutter housing.

Further, the footplates can fold up towards the lawn mower and the steering wheel can also rotate towards the seat of the lawn mower, to allow the movable arm to lift the cutting deck to an upright position.

JP 2005198524 A discloses a self-propelled sulky lawn mower which is characterized by disposing a main cutter and the sub-cutter capable of being opened or closed on one side of a travel vehicle body in the abdominal portion of the travel vehicle body suspended between a pair of right and left front wheels and a pair of right and left rear wheels, disposing the rear wheels in a smaller width between both the rear wheels than a width between both the front wheels, and disposing the sub-cutter in a state capable of storing the approximately whole body of the sub-cutter into the outside portion A of the rear wheels within the width between both the front wheels.

As a crucial part of a riding mower or a pushed mower, the chassis is arranged at the bottom of the mower, wherein mowing blades are arranged in the chassis, and a driving motor is installed in the mower for driving the blades to rotate. For the mowing efficiency depends on the length of the blades, when mowing a large lawn, a user needs longer blades for improving the mowing efficiency. However, longer mowing blades require a fixed chassis with corresponding size, resulting in the increase of the mower's size and cost of storage and transportation.

### SUMMARY OF THE INVENTION

The purpose of the present invention is to solve the shortcomings in the prior art by providing a mower folding-type chassis. Through a fixing disc and at least one rotating disc connected with the fixing disc, when mowing a lawn, the rotating discs can be rotated and unfolded relative to the fixing disc, thereby improving the mowing efficiency, and when the mower needs to be stored or transported, the rotating discs can be rotated and folded relative to the fixing disc, thus reducing the space occupation of the mower.

To achieve the above purpose, the present invention adopts the technical solution defined in the appended claims.

Compared with the prior art, the present invention has the following advantages:
According to the folding-type chassis of a lawn mower of the present invention, when mowing a lawn with the mower, the rotating discs can be rotated relative to the fixing disc, thereby enabling the rotating discs and the fixing disc to be transversely arranged side by side. Thus, the mowing area of mowing blades in the rotating discs and the fixing disc can be greatly increased, and the mowing efficiency can be significantly improved. When the mower needs to be stored or transported, the rotating discs can be rotated relative to the fixing disc so that the rotating discs and the fixing disc are arranged side by side in a longitudinal direction. At this point, the rotating discs can be partially or completely folded in the mower, thus reducing the space occupation of the mower so that the storage and transportation can be facilitated.

### BRIEF DESCRIPTION OF THE DRAWINGS

Figure 1 is a schematic diagram illustrating an overall structure of the mower (not covered by the claims);
Figure 2 is a schematic diagram illustrating a structure when the chassis of the present invention is unfolded (not covered by the claims);
Figure 3 is a schematic diagram illustrating a structure when the chassis of the present invention is folded (not covered by the claims);
Figure 4 is a structural diagram of the chassis of the present invention during the belt transmission (not covered by the claims);
Figure 5 is a structural diagram of the chassis of the present invention when driven directly by a motor (not covered by the claims);
Figure 6 is a schematic diagram illustrating a structure when the rotating discs in embodiment 1 of the present invention are unfolded;
Figure 7 is a schematic diagram illustrating a structure when the rotating discs in embodiment 1 of the present invention are folded;

In the figures:
1. Mower, 2. Fixing Disc, 3. Rotating Disc, 4. Mowing Blade, 5. Rotating Arm, 6. Lead Screw, 7. Lead-screw Motor, 8. Sliding Block, 9. Rocking Bar, 34. Shell, 35. Connecting Shaft, 36. Bearing, 37. Sleeve, 38. Connecting Hole, 39. Driving Motor, 40. Belt Wheel, 41. Through Groove.

### DETAILED DESCRIPTION OF THE INVENTION

Drawings and detailed embodiments are combined hereinafter to elaborate the technical principles of the present invention.

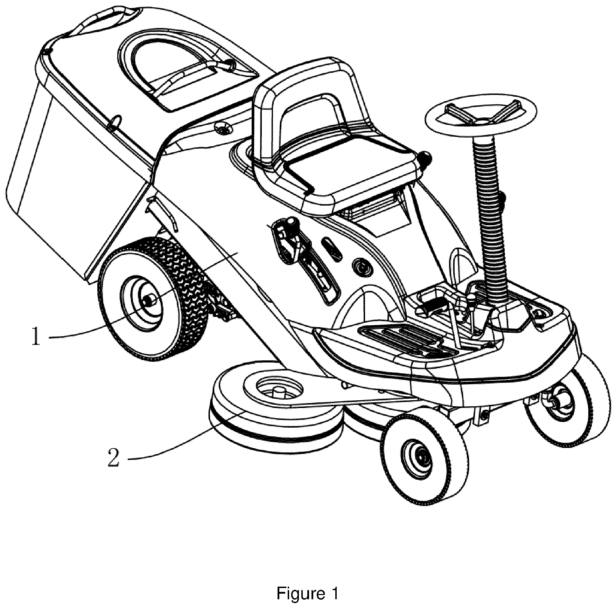

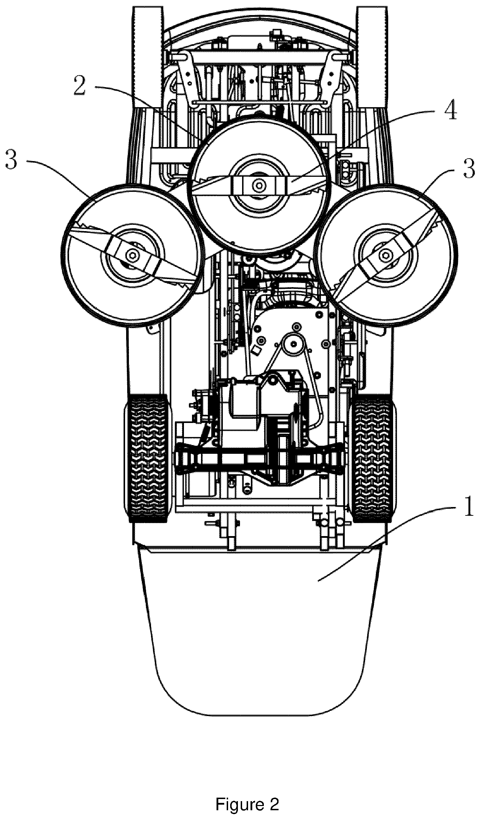

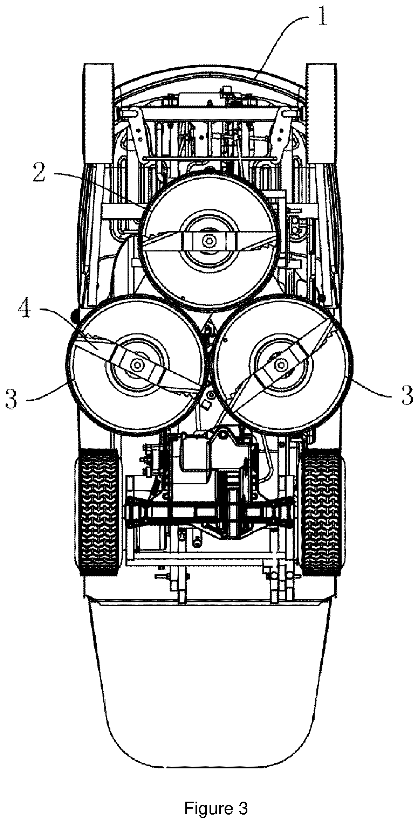

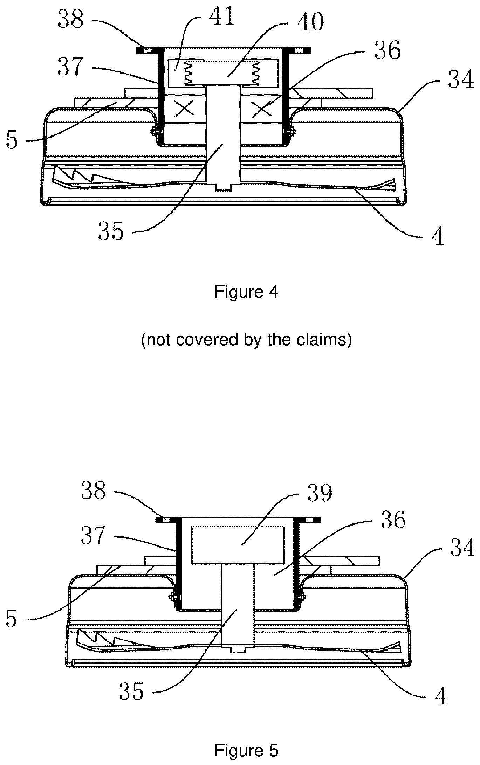

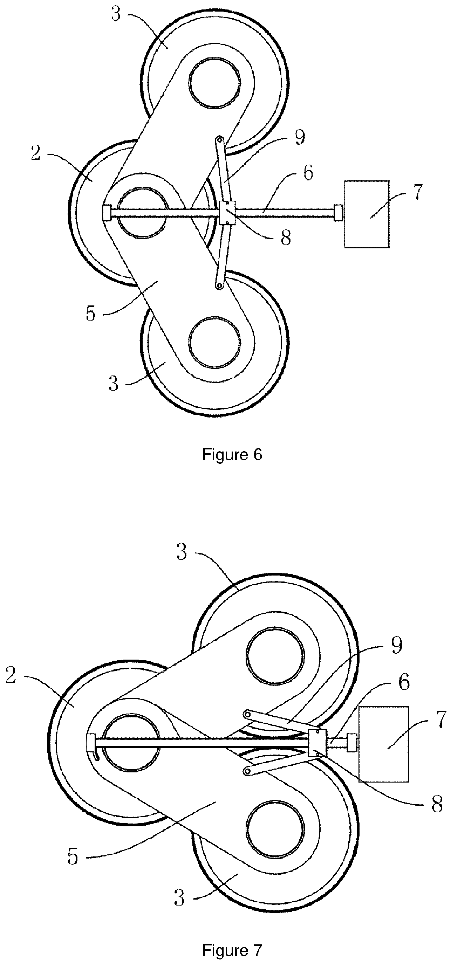

The folding-type chassis of a lawn mower of embodiment 1 is shown in Figures 1-7, which comprises a fixing disc 2 and at least one rotating disc 3 rotationally connected with the fixing disc 2. The fixing disc 2 is fixedly arranged at the bottom of the mower 1. When there're two rotating discs 3, each rotating disc 3 is respectively rotationally connected with the fixing disc 2, and when there're more than two rotating discs 3, two of the rotating discs 3 are respectively rotationally connected with the fixing disc 2, and the rest of the rotating discs 3 are respectively rotationally connected with the rotating discs 3 that are connected with the fixing disc 2. Namely, the plurality of the rotating discs 3 is connected in series. The mower 1 of the present invention can be a pushed-type mower or a riding-type mower.

The fixing disc 2 and the rotating disc 3 respectively comprise a shell 34. Mowing blades 4 are respectively arranged within the shells 34 of the fixing disc 2 and the rotating disc 3. The mowing blade 4 is transversely arranged in the shell 34, and a connecting shaft 35 is vertically arranged on the mowing blade 4. A bearing 36 interacting with the connecting shaft 35 is arranged on the shell 34. One end of the connecting shaft 35 is connected with the mowing blade 4, and the other end of the connecting shaft 35 extends into the bearing 36, thereby enabling the mowing blade 4 to be rotationally installed in the shell 34. A sleeve 37 is connected with the shell 34 of the fixing disc 2, and a connecting hole 38 is formed in the top end of the sleeve 37. The sleeve 37 is connected with a frame at the bottom of the mower 1 through the connecting hole 38. The fixing disc 2 is fixedly connected with the frame at the bottom of the mower 1 through the sleeve 37. A driving device used for driving the mowing blades 4 to rotate is arranged in the mower 1, and a grass-discharging hole is formed in the side surface or the top of the shell 34. When the mowing blades 4 are rotated, a wind pressure can be generated to blow the mowed grass out of the chassis.

The driving device further comprises a plurality of driving motors 39, which are respectively arranged on the fixing disc 2 and the rotating disc 3. The driving motors 39 are respectively in transmission connection with the connecting shaft 35 of the mowing blade 4 in the fixing disc 2 and that in the rotating disc 3. The mowing blades 4 in the fixing disc 2 and the rotating disc 3 are driven by the driving motors 39 to rotate, thus conveniently mowing the lawn.

The structure of the driving device can be various. For instance, the driving device comprises a driving motor 39, and the connecting shaft 35 of the mowing blade 4 in the fixing disc 2 and that in the rotating disc 3 penetrate through one end of the shells 34, and are respectively connected with a belt wheel 40. A belt is arranged between the belt wheel 40 on the fixing disc 2 and that on the rotating disc 3 in a sleeved mode. A through groove 41 allowing the belt to pass through is formed in the sleeve 37. The driving motor 39 is arranged either on the fixing disc 2 or on the frame at the bottom of the mower 1, and is rotationally connected with the belt wheel 40 on the fixing disc 2.

When there're two rotating discs 3, two wheel-grooves are formed in the belt wheel 40 connected with the mowing blade 4 of the fixing disc 2. Belts are respectively arranged between the two wheel-grooves and the belt wheels 40 on the two rotating discs 3 in a sleeved mode. A rotating arm 5 is connected to the center of the fixing disc 2. When the rotating discs 3 are rotated, the distance between the mowing blades 4 in the rotating discs 3 and the mowing blade 4 in the fixing disc 2 is kept unchanged all the time. Thus, the belts are always in a tensioned state. When there're two or more rotating discs 3, belts are respectively arranged between the fixing disc 2 and the rotating discs 3 that are rotationally connected with the fixing disc 2 in a sleeved mode, and belt wheels 40 are respectively arranged between the rotating discs 3 connected with the fixing disc 2 and the rest of the rotating discs 3 in a sleeved mode. At this point, as long as the driving motors 39 are initiated, the mowing blades 4 in both the fixing disc 2 and the rotating discs 3 are driven to rotate through the belts. This design greatly reduces the number of the driving motors so that the cost can be lowered. A tensioning device is further arranged on the rotating arm 5. The tensioning device comprises a tensioning wheel and a spring. The tensioning wheel is rotationally connected with a connecting rod. A stop block is further arranged on the rotating arm 5, and the spring is located between the stop block and the connecting rod. In this way, the tensioning wheel is always abutted against the belt so that the belt is always kept in a tensioned state.

Each rotating disc 3 is rotationally connected to the fixing disc 2 through a rotating arm 5, and the rotating arm 5 is connected to the center of the fixing disc 2. The rotating arm 5 is fixedly connected with the shell 34 of the rotating disc 3 through a bolt. The rotating arm 5 is sleeved outside the sleeve 37, and is rotationally connected with the sleeve 37. Preferably, a sliding groove is formed in the rotating arm 5, and a bolt is arranged on the shell 34 of the fixing disc 2. The bolt penetrates through the shell 34 and the sliding groove, and is connected with a screw cap. The rotating arm 5 can rotate relative to the bolt. Through the arrangement of the sliding groove and the bolt, a limiting function can be achieved when the rotating arm 5 is rotated, thus preventing the rotating arm 5 from excessively rotating or being separated from the sleeve 37. When the number of the rotating discs 3 is two, the number of the rotating arms 5 is also two. At this point, the two rotating arms 5 are arranged on the sleeve 37 in a stacked mode, and the two rotating arms are respectively provided with a sliding groove. Correspondingly, two bolts are arranged on the shell 34 of the fixing disc 2. Gaskets 33 are respectively arranged between the shell 34 of the fixing disc 2 and the rotating arm 5, and between the screw cap and the rotating arm 5, thereby facilitating the rotation of the rotating arm 5.

A lead-screw motor 7 is arranged on the mower 1, and an output end of the lead-screw motor 7 is connected with a lead screw 6 in a transmission mode. A lead screw seat matched with the lead screw 6 is arranged on the fixing disc 2, and a sliding block 8 is arranged on the lead screw 6. The sliding block 8 is connected with a rocking bar 9, and the rocking bar 9 is connected with the rotating arm 5. When the rotating disc 3 needs to be unfolded, the lead-screw motor 7 is initiated to drive the lead screw 6 to rotate. The lead screw 6 is rotated to enable the sliding block 8 to move along the lead screw 6 towards the position where the fixing disc 2 is located, and the rotating arm 5 is driven to rotate through the rocking bar 9 when the lead screw 6 moves. Thus, the rotating disc 3 rotates around the fixing disc 2, and is unfolded relative to the fixing disc 2. The lead-screw motor 7 can be a servo motor, a steering engine, or a motor capable of achieving the same function. The lead-screw motor 7 can be stopped at any time so that the sliding block 8 can be stopped at any position of the lead screw 6. Thus, the unfolding angle of the rotating disc 3 relative to the fixing disc 2 can be adjusted according to actual requirements. At this point, the rotating disc 3 is fixed relative to the fixing disc 2. When the lead-screw motor 7 is initiated to rotate reversely, the rotating disc 3 is driven to fold and retract relative to the fixing disc 2. Namely, the rotational motion of the lead screw 6 is converted into the linear motion of the sliding block 8 by means of a ball screw 6.

When there're two or more rotating discs 3, two of the rotating discs 3 are respectively rotationally connected with the fixing disc 2 through a rotating arm 5, and the rest of the rotating discs are respectively rotationally connected with the rotating discs 3 that are connected with the fixing disc 2 through a rotating arm 5. At this point, a sleeve 37 is arranged on the shell 34 of each rotating disc 3 that is rotationally connected to the fixing disc 2. Thus, the rotating discs 3 connected with the fixing disc 2 can be conveniently rotationally connected with the rest of the rotating discs through rotating arms 5. The plurality of rotating discs 3 can be driven by the same lead-screw motor 7. The output end of the lead-screw motor 7 is in transmission connection with a lead screw 6, and a sliding block 8 is arranged on the lead screw 6. A plurality of rocking bars 9 is connected with the sliding block 8, and the plurality of rocking bars 9 is correspondingly connected with the plurality of rotating arms 5. When the lead-screw motor 7 is initiated, the lead screw 6 is driven to rotate, enabling the sliding block 8 to move along the lead screw 6 towards the position where the fixing disc 2 is located. When the lead screw 6 moves, the plurality of rotating arms is driven to rotate simultaneously through the plurality of rocking bars 9, thereby enabling the rotating discs 3 to rotate around the fixing disc 2. Thus, the rotating discs 3 are unfolded relative to the fixing disc 2. According to this design, the number of the lead-screw motors 7, the lead screws and the sliding blocks 8 can be greatly reduced. Certainly, when there're two or more rotating discs 3, the rotating discs 3 can be respectively driven to unfold through a plurality of lead-screw motors 7, lead screws and sliding blocks 8.

According to the mower with a folding-type chassis of the present invention, when mowing a lawn with the mower 1, the rotating discs 3 can be rotated relative to the fixing disc 2, thereby enabling the rotating discs 3 and the fixing disc 2 to be transversely arranged side by side. Thus, the mowing area of mowing blades 4 in the rotating discs 3 and the fixing disc 2 can be greatly increased, and the mowing efficiency can be significantly improved. When the mower 1 needs to be stored or transported, the rotating discs 3 can be rotated relative to the fixing disc 2 so that the rotating discs 3 and the fixing disc 2 are arranged side by side in a longitudinal direction. At this point, the rotating discs 3 can be partially or completely folded in the mower 1, thus reducing the space occupation of the mower 1 so that the storage and transportation can be facilitated.

## Claims

1. A folding-type chassis of a lawn mower, comprising:
a fixing disc (2), and
at least one rotating disc (3) rotationally connected with the fixing disc (2) through a rotating arm (5), wherein the fixing disc (2) is adapted to be fixedly arranged at the bottom of the mower (1), wherein mowing blades (4) are respectively arranged within the fixing disc (2) and the rotating disc (3), wherein a driving device used for driving the mowing blades (4) to rotate is adapted to be arranged in the mower (1),
**characterized in that**
a lead-screw motor (7) is adapted to be arranged on the mower (1), wherein an output end of the lead-screw motor (7) is in transmission connection with a lead screw (6), wherein a sliding block (8) is arranged on the lead screw, and the sliding block (8) is connected with a rocking bar (9), wherein the rocking bar (9) is connected with the rotating arm (5).

2. The folding-type chassis of a lawn mower of claim 1, wherein the number of the rotating discs (3) is two, and the two rotating discs (3) are respectively rotationally connected with the fixing disc (2).

3. The folding-type chassis of a lawn mower of claim 1, wherein when the number of the rotating discs (3) is more than two, two of the rotating discs (3) are respectively rotationally connected with the fixing disc (2), and the rest of the rotating discs (3) are respectively rotationally connected with the rotating discs (3) that are connected with the fixing disc (2).

4. The folding-type chassis of a lawn mower of claims 1-3, wherein the driving device comprises a plurality of driving motors (39), which are respectively arranged on the fixing disc (2) and the rotating disc (3), wherein the driving motors (39) are respectively in transmission connection with the mowing blades (4) in the fixing disc (2) and the rotating disc (3).

5. The folding-type chassis of a lawn mower of claims 1-3, wherein the driving device comprises a driving motor (39), and the mowing blades (4) in the fixing disc (2) and the rotating disc (3) are respectively connected with a belt wheel (40), wherein a belt is arranged between the belt wheel (40) on the fixing disc (2) and that on the rotating disc (3) in a sleeved mode, wherein the driving motor (39) is in transmission connection with the belt wheel (40) on the fixing disc (2).

## Patentansprüche

1. Klappbares Gehäuse eines Rasenmähers, umfassend:
eine Befestigungsscheibe (2), und
mindestens eine Drehscheibe (3), die durch einen Dreharm (5) drehbar mit der Befestigungsscheibe (2) verbunden ist, wobei die Befestigungsscheibe (2) dafür ausgelegt ist, fest an der Unterseite des Mähers (1) angeordnet zu sein, wobei Mähmesser (4) jeweils in der Befestigungsscheibe (2) und der Drehscheibe (3) angeordnet sind, wobei eine Antriebsvorrichtung, die verwendet wird, um die Mähmesser (4) in Drehung zu versetzen, dafür ausgelegt ist, im Mäher (1) angeordnet zu sein,
**dadurch gekennzeichnet, dass**
ein Spindelmotor (7) dafür ausgelegt ist, in dem Mäher (1) angeordnet zu sein, wobei eine Abtriebsseite des Spindelmotors (7) in Übertragungsverbindung mit einer Gewindespindel (6) steht, wobei auf der Gewindespindel ein Gleitstück (8) angeordnet ist, und das Gleitstück (8) mit einer schwenkbaren Stange (9) verbunden ist, wobei die schwenkbare Stange (9) mit dem Dreharm (5) verbunden ist.

2. Klappbares Gehäuse eines Rasenmähers nach Anspruch 1, wobei die Anzahl der Drehscheiben (3) zwei beträgt und wobei die zwei Drehscheiben (3) jeweils drehbar mit der Befestigungsscheibe (2) verbunden sind.

3. Klappbares Gehäuse eines Rasenmähers nach Anspruch 1, wobei, wenn die Anzahl der Drehscheiben (3) mehr als zwei beträgt, zwei der Drehscheiben (3) jeweils mit der Befestigungsscheibe (2) drehbar verbunden sind und die übrigen Drehscheiben (3) jeweils mit den Drehscheiben (3) drehbar verbunden sind, die mit der Befestigungsscheibe (2) verbunden sind.

4. Klappbares Gehäuse eines Rasenmähers nach Anspruch 1-3, wobei die Antriebsvorrichtung mehrere Antriebsmotoren (39) umfasst, die jeweils auf der Befestigungsscheibe (2) und der Drehscheibe (3) angeordnet sind, wobei die Antriebsmotoren (39) jeweils in Übertragungsverbindung mit den Mähmessern (4) in der Befestigungsscheibe (2) und der Drehscheibe (3) stehen.

5. Klappbares Gehäuse eines Rasenmähers nach Anspruch 1-3, wobei die Antriebsvorrichtung einen Antriebsmotor (39) umfasst, und die Mähmesser (4) in der Befestigungsscheibe (2) und der Drehscheibe (3) jeweils mit einem Riemenrad (40) verbunden sind, wobei ein Riemen zwischen dem Riemenrad (40) auf der Befestigungsscheibe (2) und dem auf der Drehscheibe (3) in einer Hülsenform angeordnet ist, wobei der Antriebsmotor (39) in Übertragungsverbindung mit dem Riemenrad (40) auf der Befestigungsscheibe (2) steht.

## Revendications

1. Châssis de type pliable d'une tondeuse à gazon, comprenant :
un disque de fixation (2), et
au moins un disque rotatif (3) relié en rotation au disque de fixation (2) par l'intermédiaire d'un bras rotatif (5), dans lequel le disque de fixation (2) est adapté pour être disposé de manière fixe au bas de la tondeuse (1), dans lequel des lames de tonte (4) sont disposées respectivement à l'intérieur du disque de fixation (2) et du disque rotatif (3), dans lequel un dispositif d'entraînement utilisé pour entraîner les lames de tonte (4) en rotation est conçu pour être disposé dans la tondeuse (1),
**caractérisé en ce que**
un moteur à vis sans fin (7) est adapté pour être disposé sur la tondeuse (1), dans lequel une extrémité de sortie du moteur à vis sans fin (7) est en liaison de transmission avec une vis sans fin (6), dans lequel un bloc coulissant (8) est disposé sur la vis mère, et le bloc coulissant 20 (8) est relié à une barre basculante (9), la barre basculante (9) étant reliée au bras rotatif (5).

2. Châssis de type pliable d'une tondeuse à gazon selon la revendication 1, dans lequel le nombre de disques rotatifs (3) est de deux, et les deux disques rotatifs (3) sont respectivement liés en rotation au disque de fixation (2).

3. Châssis de type pliable d'une tondeuse à gazon selon la revendication 1, dans lequel lorsque le nombre des disques rotatifs (3) est supérieur à deux, deux des disques rotatifs (3) sont respectivement reliés en rotation au disque de fixation (2), et le reste des disques rotatifs (3) sont respectivement reliés en rotation aux disques rotatifs (3) qui sont connectés au disque de fixation (2).

4. Châssis de type pliable d'une tondeuse à gazon selon les revendications 1 à 3, dans lequel le dispositif d'entraînement comprend une pluralité de moteurs d'entraînement (39), qui sont respectivement disposés sur le disque de fixation (2) et le disque rotatif (3), dans lequel les moteurs d'entraînement (39) sont respectivement en liaison de transmission avec les lames de tonte (4) dans le disque de fixation (2) et le disque rotatif (3).

5. Châssis de type pliable d'une tondeuse à gazon selon les revendications 1 à 3, dans lequel le dispositif d'entraînement comprend un moteur d'entraînement (39), et les lames de tonte (4) dans le disque de fixation (2) et le disque rotatif (3) sont respectivement reliées à une roue à courroie (40), dans lequel une courroie est disposée entre la roue à courroie (40) sur le disque de fixation (2) et celle sur le disque rotatif (3) en mode gainé, dans lequel le moteur d'entraînement (39) est en liaison de transmission avec la roue de courroie (40) sur le disque de fixation (2).
